# FASCICULE DE BREVET EUROPEEN

(11) **EP 0 908 752 B1**
(45) Date de publication et mention de la délivrance du brevet: **07.07.2004**
(21) Numéro de dépôt: 98402361.4
(22) Date de dépôt: 25.09.1998
(51) Int. Cl.: G02B 23/08, F41H 5/26, F41G 1/40

(54) **Dispositif d'observation à travers la paroi d'une enceinte de protection à l'aide d'un épiscope**
Vorrichtung zur Beobachtung durch eine Wand eines Schutzgehäuses mit einem Episkop
Device for observation through the wall of a protective enclosure by means of an episcope

(30) Priorité: 07.10.1997 FR 9712468
(43) Date de publication de la demande: 14.04.1999
(73) Titulaire: GIAT INDUSTRIES, 78000 Versailles (FR)
(72) Inventeur: Delorme, André, 42000 Saint Etienne (FR)
(74) Mandataire: Célanie, Christian

(56) Documents cités:
- EP-A- 0 550 869
- EP-A- 0 608 907
- FR-A- 407 463
- FR-A- 1 170 518
- FR-A- 2 496 905
- GB-A- 2 089 519
- US-A- 1 466 567
- US-A- 2 130 006
- US-A- 2 570 357
- US-A- 3 165 573
- US-A- 3 229 576
- US-A- 3 857 632

## Description

L'invention concerne un dispositif d'observation à travers la paroi d'une enceinte de protection à l'aide d'un épiscope, c'est-à-dire d'un instrument optique permettant d'observer à travers une paroi derrière laquelle l'observateur est protégé.

On a déjà proposé des dispositifs de levage du porte-objet pour des épiscopes en prévoyant deux leviers doubles. Ces dispositifs sont décrits dans les documents FR-A-2 056 673 et FR-A-2 234 579. Cependant, dans ces documents, aucun moyen n'est prévu pour réduire la hauteur de l'épiscope.

On a également proposé des systèmes d'observation dans lesquels un miroir est monté pivotant par rapport à son support. Ainsi, le brevet FR-A-407 463 décrit un dispositif d'observation équipé de deux miroirs, le miroir inférieur étant articulé pour permettre le réglage de son orientation par rapport à l'oeil d'un observateur. Ce miroir demeure toujours dans la zone d'évolution de l'observateur.

Le brevet EP-A-0 550 869 décrit un épiscope constitué des deux miroirs fixés chacun à deux supports respectifs. L'un des deux miroirs est pivotant par rapport à son support afin de permettre d'atteindre le second pour le nettoyer.

Dans un véhicule militaire destiné par exemple au transport de troupes, il est nécessaire que chaque combattant puisse observer le paysage extérieur. On pourrait pour cela prévoir un épiscope au travers duquel cette observation serait possible. Mais dans ce cas, l'épiscope doit faire saillie dans l'habitacle, ce qui constitue un obstacle susceptible d'entraver les mouvements des combattants surtout lors des opérations d'évacuation.

Le but de la présente invention est de fournir un dispositif d'observation implanté dans la paroi d'un véhicule et ne faisant saillie que faiblement à l'intérieur de ce véhicule.

Pour atteindre ce but, l'invention propose un dispositif d'observation à travers la paroi d'une enceinte de protection, telle un véhicule militaire, à l'aide d'un épiscope fixé au niveau de ladite paroi muni d'une fenêtre externe d'entrée de rayons lumineux et d'une fenêtre interne de sortie, comprenant un miroir coopérant avec la fenêtre de sortie pour assurer la transmission des rayons lumineux dans une direction opposée à celle de la direction d'observation, caractérisé en ce que le miroir est escamotable à l'aide d'un système articulé reliant ce miroir à l'épiscope pour lui permettre d'occuper une position escamotée dans laquelle il est appliqué contre la fenêtre de sortie et une position déployée dans laquelle il permet l'observation.

Selon une caractéristique, le bloc transparent comporte une ou deux faces de réflexion.

Selon un mode de réalisation, le miroir est escamotable par rotation.

Selon une caractéristique, le système articulé est constitué d'une embase munie d'une rainure, d'un support articulé à une extrémité de l'embase et d'un bras relié à une extrémité au support et à l'autre à un axe coulissant dans la rainure.

Selon une autre caractéristique, la fenêtre de sortie de l'épiscope est inclinée d'un angle aigü par rapport à un plan passant par la fenêtre de d'entrée.

Selon encore une autre caractéristique, le miroir est rabattable contre la fenêtre de sortie ou à l'opposé de celle-ci.

Selon encore une autre caractéristique, le système articulé est constitué d'un support dont l'extrémité est articulée par rapport à l'épiscope et présente une surface semi-cylindrique coopérant avec un moyen de maintien du miroir dans une position angulaire déterminée.

Selon un autre mode de réalisation, le miroir est escamotable par translation à l'aide d'un système de guidage reliant ce miroir à l'épiscope pour lui permettre d'occuper une position escamotée dans laquelle il est appliqué contre la fenêtre de sortie et une position déployée dans laquelle il permet l'observation.

Avantageusement, le dispositif comprend des moyens pour maintenir le miroir dans une position angulaire fixe par rapport à l'épiscope.

Le miroir est du type plan ou concave.

Un tout premier avantage de l'invention réside dans le fait que l'encombrement est réduit pour l'observateur, ce qui facilite l'accès à son poste d'observation.

Un autre avantage de l'invention réside dans l'ajustement variable de la position du miroir en fonction de la taille de l'observateur.

D'autres caractéristiques, détails et avantages de l'invention apparaîtront plus clairement à la lecture du complément de description qui va suivre de modes de réalisation donnés à titre d'exemple en relation avec des dessins sur lesquels :
- la figure 1 représente une vue générale de l'implantation du dispositif selon l'invention dans un véhicule,
- les figures 2A et 2B représente des vues en coupe schématique montrant l'implantation du dispositif d'observation en position d'utilisation,
- les figures 3 et 4 représentent des vues schématiques montrant le miroir en position escamotée,
- la figure 5 montre une variante de la structure des moyens d'articulation,
- les figures 6 et 7 montrent des moyens d'escamotage en translation,
- et les figures 8 et 9 représentent des coupes AA de la figure 2 montrant notamment les moyens de blocage de la position angulaire du miroir.

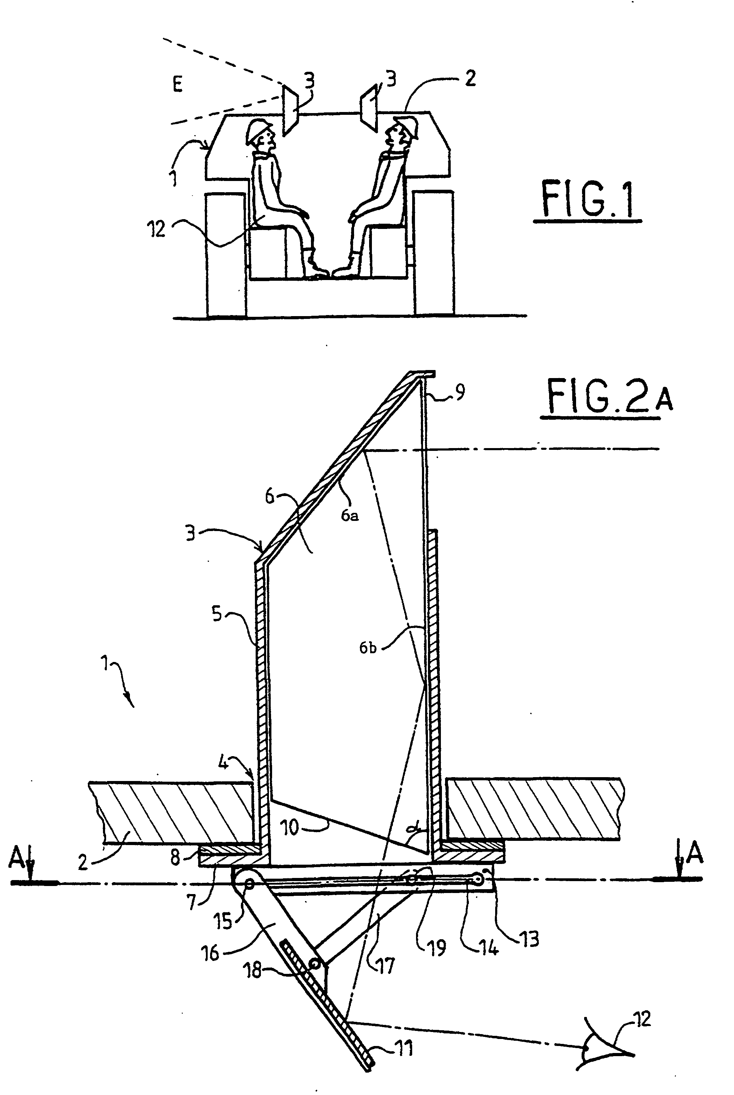

Sur la figure 1, on a représenté schématiquement un véhicule 1, par exemple un véhicule du type militaire, avec lequel les combattants sont amenés à se déplacer. L'enceinte interne constitue classiquement une protection contre les agressions balistiques, nucléaires, biologiques et chimiques. Sur la paroi supérieure 2 de l'enceinte, on fixe un épiscope 3 dont le rôle est de permettre à un combattant 12 d'observer son environnement extérieur, suivant le champ E dans une direction opposée à la direction du regard. Cette direction pourrait être bien entendu celle du regard.

Selon l'invention, la partie basse d'un épiscope connu a été éliminée et remplacée par une face réfléchissante escamotable.

L'épiscope 3 suivant la figure 2A est intégré dans une ouverture 4 pratiquée dans la paroi 2 et comprend classiquement un capot 5 et une masse transparente 6 équipée ici de deux faces réfléchissantes 6a et 6b. L'épiscope est fixé par l'intermédiaire du rebord 7 du capot 5, un joint d'étanchéité 8 étant interposé entre ce rebord et la paroi 2. L'épiscope 3 comprend donc une fenêtre d'entrée 9 disposée sensiblement verticalement en faisant saillie à l'extérieur et une fenêtre de sortie 10. La fenêtre 10 est inclinée d'un angle aigü par rapport à un plan passant par la fenêtre d'entrée 9 pour coopérer avec un miroir 11 afin de couvrir le champ de vision de l'épiscope d'une part et de compenser les variations d'inclinaison du miroir liées à la taille de l'observateur. Les rayons lumineux venant de l'extérieur sont donc réfléchis deux fois avant de frapper le miroir 11.

Le miroir 11 est rendu escamotable par rotation à l'aide d'un système articulé comprenant une embase 13 solidaire du rebord 7 ou de la paroi 2, par exemple par vissage ou soudage. L'embase 13 est munie d'une fente 14 longitudinale et d'un axe 15, maintenu dans une position fixe, autour duquel pivote le support 16 du miroir. Une bielle 17 est reliée de manière fixe au support 16 par un axe 18 éloigné de l'axe 15 et à un axe 19 coulissant dans la fente 14. Le système articulé est donc délimité par l'embase 13, le support 14 et la bielle 17 et confère au miroir 11 une position angulaire quelconque par rapport à la fenêtre de sortie 10.

Sur la figure 2B, on a représenté un épiscope 6 quasiment identique à celui de la figure 2A à l'exception de la partie haute en saillie par rapport à l'enceinte 2. Dans cette réalisation, l'épiscope 6 ne comporte qu'une face 6c réfléchissante permettant de transmettre les rayons lumineux dans la direction du regard de l'observateur. Le rayon lumineux ne subit qu'une reflexion avant d'atteindre le miroir 11.

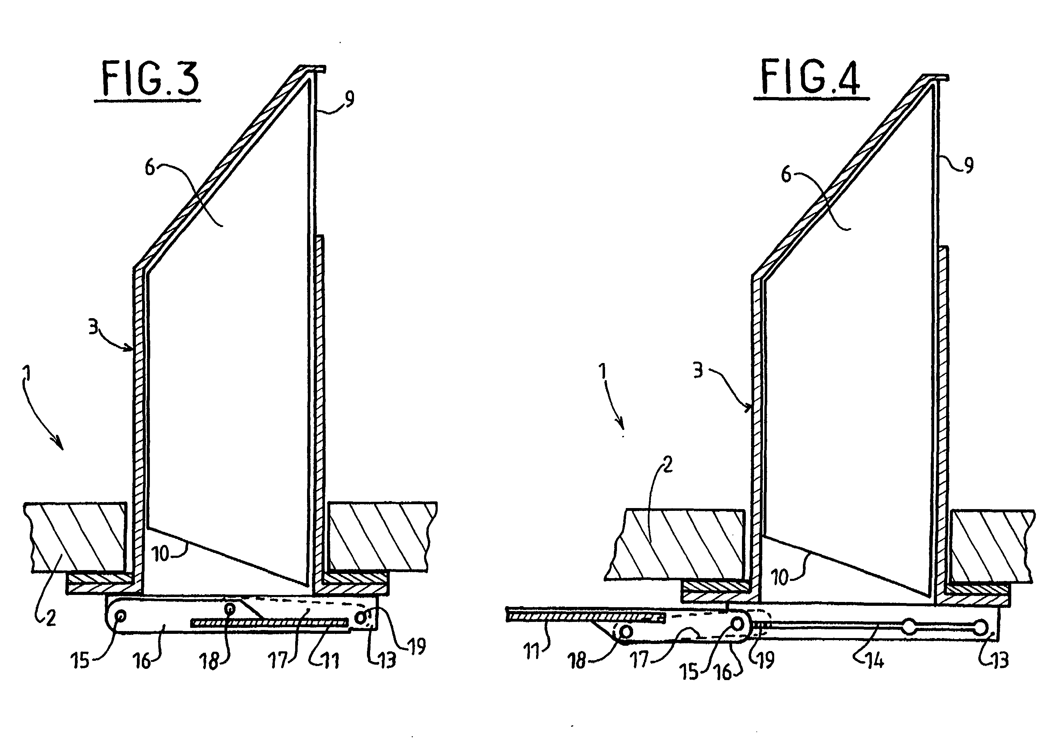

Comme décrit précédemment, la fente 14 est pratiquée au niveau de l'embase 13. Elle pourrait être disposée sans difficulté sur le support 16 du miroir, la bielle 17 étant alors fixée sur l'embase. On a représenté une fente 14 occupant pratiquement la largeur de l'embase pour permettre l'escamotage du miroir 11 soit vers l'embase 13 comme montré sur la figure 3, soit à l'opposé de celle-ci dans le prolongement de l'embase comme représenté sur la figure 4.

Sur la figure 3, on a représenté le miroir 11 dans sa position escamotée, c'est-à-dire qu'il a été ramené contre la fenêtre de sortie 10 par rotation, des moyens étant prévus pour maintenir ce miroir 7 dans cette position. De cette manière, l'épiscope 3 ainsi modifié ne constitue plus une gêne pour le combattant lorsque celui-ci veut accéder à son poste ou en sortir. L'encombrement, notamment en hauteur, est donc réduit au minimum. De plus, suivant l'orientation de la fenêtre d'entrée 9, le combattant peut observer l'environnement qui est devant (fig. 2B) ou derrière lui (fig.2A). Le miroir 11 est rabattu contre l'embase 13 vers la fenêtre de sortie 10, la bielle 17 étant appliquée contre l'embase et l'axe 19 étant placé au niveau de l'extrémité libre de la fente 14 non visible sur le dessin. Sur la figure 4, le miroir 11 est rabattu dans la direction opposée à celle de la figure 2, la fenêtre de sortie 10 étant complètement dégagée. Dans cette position, l'axe 19 fixé à la bielle 17 est ramené au voisinage de l'axe 15 fixé au voisinage de l'autre extrémité de la fente 14. On peut considérer cette configuration comme un escamotage d'urgence utilisé par l'observateur 12 en cas de sortie précipitée.

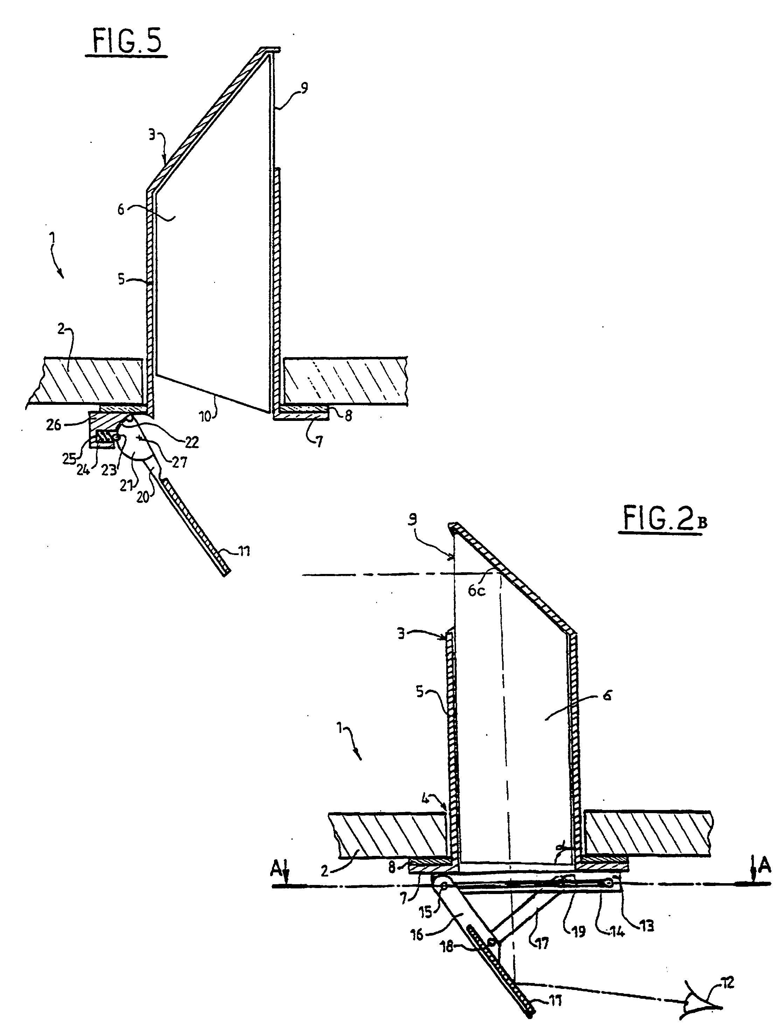

La figure 5 illustre une autre variante de réalisation de l'escamotage du miroir 11 par rotation. Ce miroir est fixé à un support 20 prolongé par une extrémité 21 semi-cylindrique fixée au rebord 7 du capot 5 de l'épiscope 3. L'extrémité 21 est munie sur sa périphérie d'une denture 22 destinée à coopérer avec une bille 23 soumise à l'action d'un ressort 24 engagé dans un logement borgne 25 pratiqué dans un bourrelet 26 intégré au rebord 7. Bien entendu, le support 20 est monté rotatif par rapport à un axe 27 solidaire du rebord 7 ou de la paroi 2. Ainsi, la bille 23 assure le maintien du miroir 11 dans la position angulaire souhaitée par l'utilisateur. La dent supérieure détermine la position d'escamotage du miroir et la dent inférieure fixe l'écartement maximum du miroir 11 par rapport à la fenêtre de sortie 10 de l'épiscope 3.

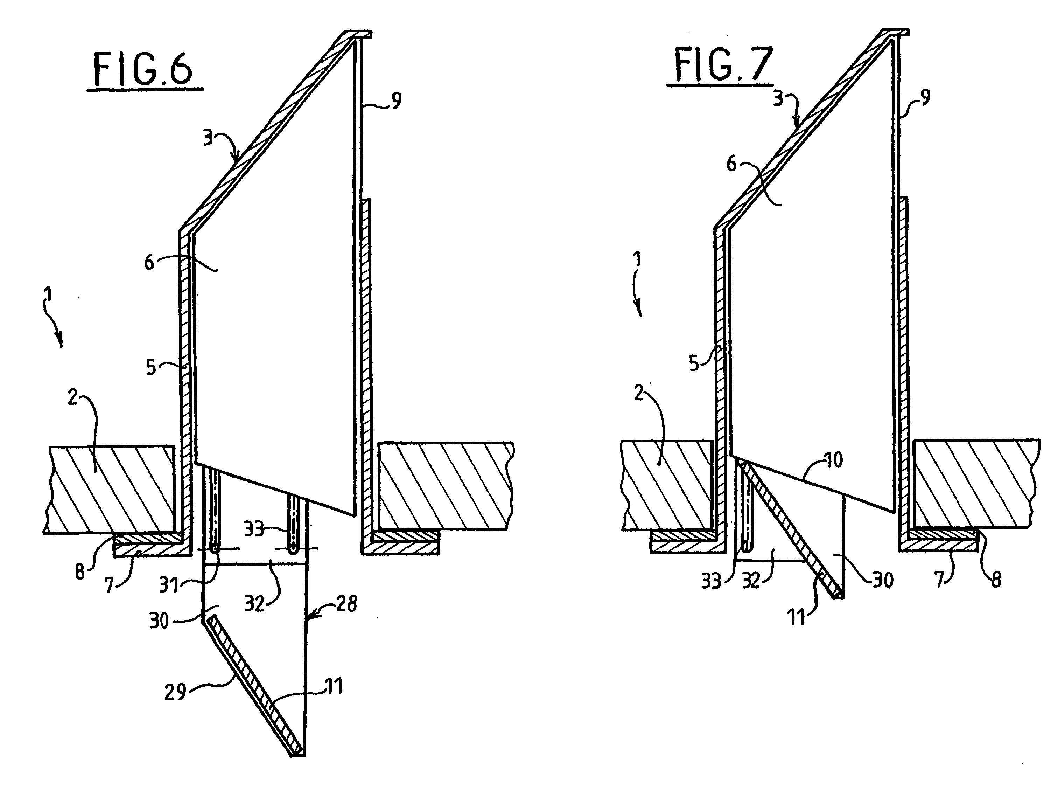

Les figures 6 et 7 illustrent l'escamotage du miroir 11 par translation. A cette fin, le miroir 11 est solidaire d'un support 28 comprenant un fond incliné 29, sur lequel le miroir est fixé, et deux parois latérales 30 dont une seule est représentée sur les figures. Dans cette réalisation, deux réflexions se produisent dans le bloc transparent 6. Mais la fenêtre 9 pourrait être orientée comme montré sur la figure 2B. Les parois 30 portent des doigts 31 pour coulisser par rapport à deux guides 32 munis de rainures 33 (un seul guide est visible sur les figures). Bien entendu, les parois 30 et les guides 32 sont disposés deux à deux de chaque côté de l'épiscope, par exemple dans le capot 5 de celui-ci. La figure 6 montre la position la plus basse du miroir 11 et la figure 7 la position d'escamotage vers la fenêtre de sortie 10.

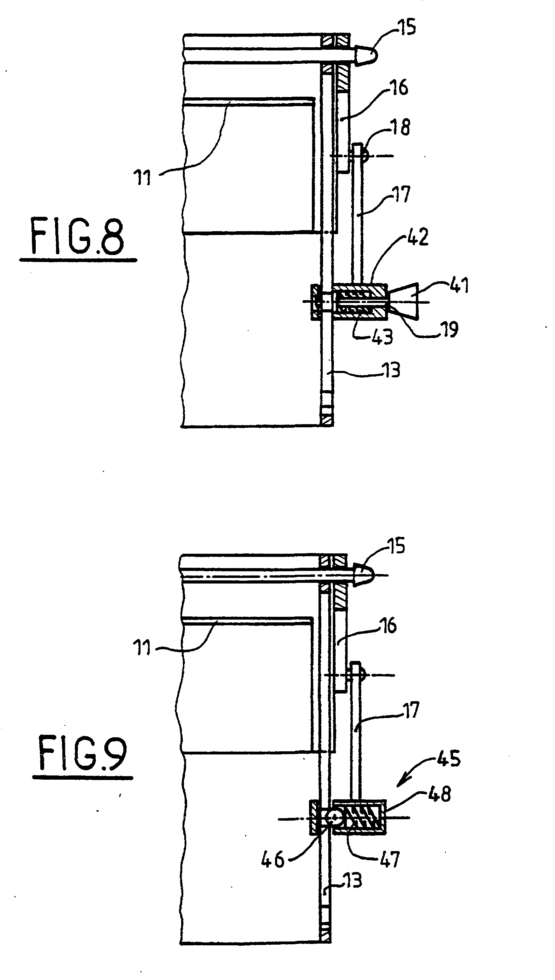

Les figures 8 et 9 illustrent des coupes AA selon la figure 2A avec un dispositif d'indexation du miroir 11.

La figure 8 montre une première réalisation selon laquelle la bielle 17 est fixée d'un côté rigidement au support 16 par l'axe 18 et reliée à l'autre extrémité à l'embase 13 par l'axe 19 prolongé extérieurement par un bouton 41. L'axe 19 coulisse dans un corps 42 relié à l'embase 13, un ressort 43 maintenant ledit axe en appui constant dans la rainure 14 pour assurer l'indexation.

La figure 9 illustre un système d'indexation 45 selon lequel l'appui constant est obtenu par une bille 46 soumise à l'action d'un ressort 47, l'ensemble étant intégré dans un capot 48.

## Revendications

1. Dispositif d'observation à travers la paroi d'une enceinte de protection, telle un véhicule militaire, à l'aide d'un épiscope (3) fixé au niveau de ladite paroi (2) muni d'une fenêtre externe d'entrée (9) de rayons lumineux et d'une fenêtre interne de sortie (10), comprenant un miroir (11) coopérant avec la fenêtre de sortie (10) pour assurer la transmission des rayons lumineux dans une direction opposée à celle de la direction d'observation, **caractérisé en ce que** le miroir (11) est escamotable à l'aide d'un système articulé (13, 16, 17) reliant ce miroir (11) à l'épiscope (3) pour lui permettre d'occuper une position escamotée dans laquelle il est appliqué contre la fenêtre de sortie (10) et une position déployée dans laquelle il permet l'observation.

2. Dispositif d'observation selon la revendication 1, **caractérisé en ce que** le bloc transparent (6) comporte une (9c) ou deux (9a, 9b) faces de réflexion.

3. Dispositif d'observation selon la revendication 2, **caractérisé en ce que** le miroir (11) est escamotable par rotation.

4. Dispositif d'observation selon l'une quelconque des revendications 1 à 3, **caractérisé en ce que** le système articulé est constitué d'une embase munie d'une rainure (14), d'un support (16) articulé à une extrémité de l'embase et d'un bras (17) relié à une extrémité au support et à l'autre à un axe (19) coulissant dans la rainure.

5. Dispositif d'observation selon la revendication 4, **caractérisé en ce que** la fenêtre de sortie (10) de l'épiscope est inclinée d'un angle aigü par rapport à un plan passant par le fenêtre d'entrée (9).

6. Dispositif d'observation selon la revendication 4, **caractérisé en ce que** le miroir (11) est rabattable contre la fenêtre de sortie ou à l'opposé de celle-ci.

7. Dispositif d'observation selon la revendication 1, **caractérisé en ce que** le système articulé est constitué d'un support (20) dont l'extrémité est articulée par rapport à l'épiscope et présente une surface semi-cylindrique coopérant avec un moyen de maintien du miroir dans une position angulaire déterminée.

8. Dispositif d'observation selon la revendication 1, **caractérisé en ce que** le miroir (11) est escamotable par translation à l'aide d'un système de guidage (30, 31) reliant ce miroir (11) à l'épiscope (3) pour lui permettre d'occuper une position escamotée dans laquelle il est appliqué contre la fenêtre de sortie (10) et une position déployée dans laquelle il permet l'observation.

9. Dispositif d'observation selon l'une quelconque des revendications précédentes, **caractérisé en ce qu'**il comprend des moyens pour maintenir le miroir (7) dans une position angulaire fixe par rapport à l'épiscope (3).

10. Dispositif d'observation selon l'une quelconque des revendications précédentes, **caractérisé en ce que** le miroir (7) est du type plan ou concave.

## Patentansprüche

1. Vorrichtung zur Beobachtung durch die Wand einer Schützumhüllung, wie eines militärischen Fahrzeuges, hindurch mit Hilfe eines Episkopes (3), das im Bereich der Wand (2) befestigt ist, die mit einem äußeren Eintritts-Fenster (9) für Lichtstrahlen und einem inneren Austritts-Fenster (10) versehen ist, umfassend einen Spiegel (11), der mit dem Austritts-Fenster (10) zusammenwirkt, um die Übertragung von Lichtstrahlen in eine Richtung, die jener der Beobachtungsrichtung entgegengesetzt ist, zu gewährleisten, **dadurch gekennzeichnet, dass** der Spiegel (11) mit Hilfe eines gelenkigen Systems (13, 16, 17) versenkbar ist, das diesen Spiegel (11) mit dem Episkop (3) verbindet, um ihm zu ermöglichen, eine eingefahrene Position, in der er an das Austritts-Fenster (10) angelegt ist und eine ausgefahrene Position einzunehmen, in der er die Beobachtung ermöglicht.

2. Vorrichtung zur Beobachtung nach Anspruch 1, **dadurch gekennzeichnet, dass** der transparente Block (6) eine (9c) oder zwei Reflexionsseiten (9a, 9b) umfasst.

3. Vorrichtung zur Beobachtung nach Anspruch 2, **dadurch gekennzeichnet, dass** der Spiegel (11) durch Drehung versenkbar ist.

4. Vorrichtung zur beobachtung nach Anspruch 1, **dadurch gekennzeichnet, dass** das gelenkige System aus einer Anschlussleiste (13), die mit einem Schlitz (14) versehen ist, einem Träger (16), der an einem Ende der Anschlussleiste angelenkt ist, und einem Arm (17) gebildet, der mit einem Ende mit dem Träger und mit dem anderen mit einem Bolzen (19), der in dem Schlitz gleitet, verbunden ist.

5. Vorrichtung zur Beobachtung nach Anspruch 4, **dadurch gekennzeichnet, dass** das Austrittsfenster (10) des Episkops in einem in Bezug auf eine durch das Eintrittsfenster (9) verlaufende Ebene spitzen Winkel geneigt ist.

6. Vorrichtung zur Beobachtung nach Anspruch 5, **dadurch gekennzeichnet, dass** der Spiegel (11) an das Austrittsfenster oder von diesem weg klappbar ist.

7. Vorrichtung zur Beobachtung nach Anspruch 1, **dadurch gekennzeichnet, dass** das gelenkige System aus einem Träger (20), dessen Ende in bezug auf das Episkop angelenkt ist, gebildet wird und eine halbzylindrische Fläche aufweist, die mit einem Mittel zum Festhalten des Spiegels in einer bestimmten Winkelposition zusammenwirkt.

8. Vorrichtung zur Beobachtung nach Anspruch 1, **dadurch gekennzeichnet, dass** der Spiegel (11) mit Hilfe eines Steuerungssystems (30, 31) durch Verschiebung versenkbar ist, das diesen Spiegel (11) mit dem Episkop (3) verbindet um ihm zu ermöglichen, eine eingefahrene Position, in der er an das Austritts-Fenster (10) angelegt ist und eine gegen den Spiegel ausgefahrene Position einzunehmen, in der er die Beobachtung ermöglicht.

9. Vorrichtung zur Beobachtung nach einem der irgendwelchen oben genannten Ansprüchen, **dadurch gekennzeichnet, dass** sie Mittels entspriecht, um den Spiegel (7) in einer bestimmten Winkelposition zu erhalten.

10. Vorrichtung zur Beobachtung nach einem der vorhergehenden Ansprüche, **dadurch gekennzeichnet, dass** der Spiegel (7) von ebener oder konkaver Bauart ist.

## Claims

1. An observation device through the wall of a protective enclosure, such as a military vehicle, using an episcope (3) fastened to said wall (2) and provided with an external inlet window (9) for light rays and an internal outlet window (10), comprising a mirror (11) cooperating with the outlet window (10) to ensure the transmission of the light rays in a direction opposed to that of the observation direction, ***wherein*** the mirror (11) may be retracted using an articulated system (13, 16, 17) connecting this mirror (11) to the episcope (3) to enable it to occupy a retracted position in which it is applied against the outlet window (10) and a deployed position in which it makes observation possible.

2. An observation device according to Claim 1, wherein the transparent block (6) incorporates one (9c) or two (9a, 9b) reflective surfaces.

3. An observation device according to Claim 2, wherein the mirror (11) is retracted by rotation.

4. An observation device according to anyone of the preccedings Claims, wherein the articulated system is constituted by a base (13) provided with a groove (14), a support (16) articulated at one end of the base and an arm (17) connected at one end to the support and at the other to a spindle (19) sliding in the groove.

5. An observation device according to Claim 4, wherein the outlet window (10) of the episcope is inclined at a sharp angle with respect to a plane passing through the inlet window (9).

6. An observation device according to Claim 4, wherein the mirror (11) can be pushed back against the outlet window or on the opposite side to it.

7. An observation device according to Claim 1, wherein the articulated system is constituted by a support (20) whose end is articulated with respect to the episcope and which has a semi-cylindrical surface cooperating with means to retain the mirror in a predetermined angular position.

8. An observation device according to Claim 1, wherein the mirror (11) is retracted by translation using a guidance system (30, 31) linking this mirror (11) to the episcope (3) to allow it to occupy a retracted position in which it is applied against the outlet window (10) and a deployed position in which observation is possible.

9. An observation device according to any one of the above Claims, wherein it comprises means to retain the mirror (7) in an angular position that is fixed with respect to the episcope (3).

10. An observation device according t one of the above Claims, wherein the mirror (7) is of the plane or concave type.
